# EUROPÄISCHE PATENTSCHRIFT

(11) **EP 1 762 412 B1**
(45) Veröffentlichungstag und Bekanntmachung des Hinweises auf die Patenterteilung: **27.06.2012**
(21) Anmeldenummer: 06017118.8
(22) Anmeldetag: 17.08.2006
(51) Int. Cl.: B60J 10/10, B60J 7/12, B60J 1/02, B60J 10/02

(54) **Cabriolet-Fahrzeug mit einem Softtop**
Cabriolet vehicle with soft top
Cabriolet avec capote

(30) Priorität: 09.09.2005 DE 102005043264
(43) Veröffentlichungstag der Anmeldung: 14.03.2007
(73) Patentinhaber: Wilhelm Karmann GmbH, 49084 Osnabrück (DE)
(72) Erfinder: Oberhoff, Thomas, 49186 Bad Iburg (DE); Heselhaus, Udo, 49479 Ibbenbüren (DE)
(74) Vertreter: Kronthaler, Schmidt & Coll.

(56) Entgegenhaltungen:
- EP-A- 0 618 101
- EP-A- 0 930 188
- EP-A- 1 371 509
- DE-C1- 19 622 953
- JP-U- 3 098 166
- JP-U- 59 050 874
- JP-U- 59 188 718

## Beschreibung

Die Erfindung betrifft ein Cabriolet-Fahrzeug mit einem zumindest teilweise mit einem Bezug versehenen Dach, wobei der Bezug an seinen quer außen liegenden Rändern an beweglichen seitlichen Rahmenteilen gehalten ist, nach dem Oberbegriff des Anspruchs 1.

Bei üblichen Cabriolet-Fahrzeugen mit einem flexiblen Dachbezug, häufig auch als Softtops bezeichnet, grenzen die seitlichen Rahmenteile bei geschlossenem Dach derart an die Seitenscheiben an, dass deren Außenflächen nahezu bündig zu den Rahmenteilen liegen. Die Außenkontur der Scheibenflächen, auch als Scheibentonne bezeichnet, erstrecken sich damit in Fahrzeugquerrichtung etwa genau so breit nach außen wie die seitlichen Rahmenteile und die daran gehaltenen Außenkanten des Dachbezugs.

Um im abgelegten Dachzustand seitlich des Daches verbleibende Spalte zu minimieren, zum Beispiel bei einer sog. Z-Faltung, bei der das vordere Dachende als obere Lage des durch das abgelegte Dach gebildeten Pakets liegt, ist es wünschenswert, das vordere Dachende möglichst breiter als einen hinteren Dachbereich, der die Heckscheibe umfasst, ausbilden zu können. Andererseits ist jedoch die Seitentonne häufig fest vorgegeben und kann über den Längsverlauf des Fahrzeugs nicht beliebig verändert werden, da die Seitenscheiben in geradlinige Schächte der Karosserie versenkbar sein sollen. Die Breite der Seitenscheiben ist daher nur begrenzt an derartige Erfordernisse anpassbar.

In der gattungsgemäßen EP 0 618 101 A2 ist ein Kraftfahrzeug mit einem Dach gezeigt, welches seitliche Dachrahmen aufweist. An den seitlichen Dachrahmen ist ein Verdeckbezug des Daches angeordnet. Die seitlichen Dachrahmen sind zudem mit einer Dichtungseinrichtung verbunden, welche in geschlossener Dachposition mit einer Sichtscheibe von Türen zusammenwirken.

In der EP 0 930 188 A1 ist ein Kraftfahrzeug mit seitlichen Sichtscheiben gezeigt, welche in ihrem oberen Bereich an eine Dichtungseinrichtung eines seitlichen Dachrahmens grenzen. Die Dichtungseinrichtung ist über Trägerschienen mit Schenkeln an dem Dachrahmenabschnitt angeordnet.

Der Erfindung liegt das Problem zugrunde, eine Breitenanpassung des Daches gegenüber in der Breite fest vorgegebenen Teilen zu erreichen, wobei das Dach platzsparend abgelegt werden kann.

Die Erfindung löst dieses Problem durch ein Cabriolet-Fahrzeug mit den Merkmalen des Anspruchs 1. Vorteilhafte Ausgestaltungen und Weiterbildungen der Erfindung ergeben sich aus den weiteren Ansprüchen 2 bis 9.

Bei einem erfindungsgemäß ausgebildeten Cabriolet-Fahrzeug verjüngen sich die Leisten entgegen der Fahrtrichtung nach hinten hin, wodurch sich lediglich eine Verbreiterung des vorderen Dachendes ergibt, wohingegen das Dach nach hinten hin schmaler werden kann. Damit kann auch der Dachaufnahmeraum nach unten hin platzsparend verschmälert werden. Das bei einer Z-Faltung bei der Dachöffnung in gleichbleibender Orientierung zuoberst abgelegte vordere Dachende kann dann die darunter liegenden Dachbereiche seitlich überragen und nach Art eines Deckels nach oben hin abdecken.

Durch die Anordnung von Abstandsleisten zwischen den Dichtungen für die Seitenscheiben und den Bezugrändern lassen sich diese gegenüber den Seitenscheiben weiter außen anordnen, wodurch der entsprechende Dachbereich an Breite gewinnt.

Eine Mitbeweglichkeit der Leisten mit der Dachöffnung ist gewährleistet, wenn die Leisten in mehrere Teilabschnitte entsprechend den einzelnen seitlichen Rahmenteilen geteilt sind.

Sofern die Leisten zwischen Rahmenteil und Bezugsrand eine Außenfläche aufweisen, die bei geschlossenem Dach eine nach quer außen und eine nach unten weisende Erstreckungsrichtung hat, kann diese auch als Sensor- oder Dekorationsfläche ausgebildet sein, zum Beispiel ein Einklemmen beim Dachschließen verhindernde Sensoren, LEDs oder Dekorelemente, wie etwa Chromlinien, umfassen.

Auch für einen die Windschutzscheibe seitlich einfassenden Rahmenteil als Teil einer A-Säule kann auf der entgegen der Fahrtrichtung weisenden Seite der A-Säule eine nach quer außen vorspringende und die Breite der geschlossenen Seitenscheiben nach außen überragende Sichtkante vorgesehen sein, die eine Anpassung an den seitlichen Überstand des Daches gegenüber der Scheibentonne ermöglicht.

Auch diese Sichtkante kann mit Beleuchtungs-, Kamera- oder Sensoreinheiten, zum Beispiel einer Rückfahrkamera, versehen sein, insbesondere wenn das Lot auf dieser Fläche mit einer Komponente nach hinten und nahezu parallel zum Fahrzeug weist.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: eine schematische, perspektivische Ansicht von schräg hinten des oberen Bereichs eines erfindungsgemäßen Cabrioletfahrzeugs in einer vorne und hinten abgebrochenen Darstellung mit zusätzlich eingezeichneten Schnittlinien,
- Fig. 2: einen Seitenansicht im wesentlichen des in Fig. 1 dargestellten Ausschnitts,
- Fig. 3: eine perspektivische Ansicht von schräg vorne im wesentlichen des in Fig. 1 dargestellten Ausschnitts,

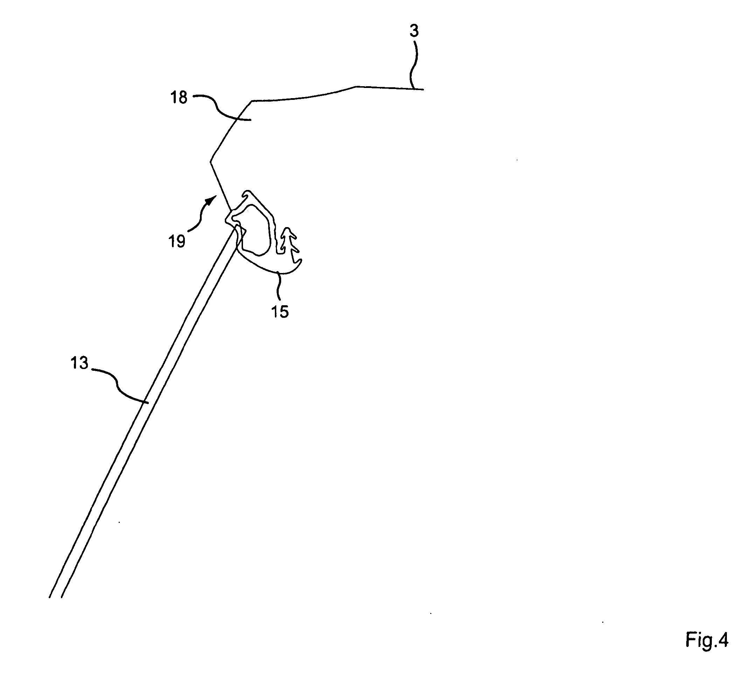

- Fig. 4: einen Schnitt entlang der Linie IV-IV in Fig. 3,
- Fig. 5: einen Schnitt entlang der Linie V-V in Fig. 3,
- Fig. 6: einen Schnitt entlang der Linie VI-VI in Fig. 3,
- Fig. 7: einen Schnitt entlang der Linie VII-VII in Fig. 3,
- Fig. 8: einen Schnitt entlang der Linie VIII-VIII in Fig. 3.

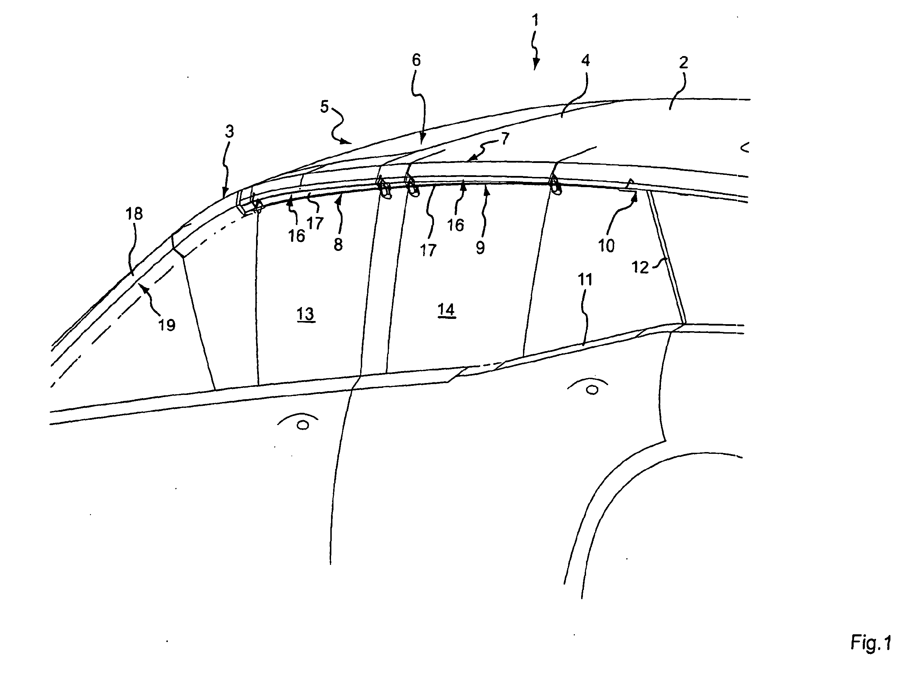

Das in Fig. 1 ausschnittsweise dargestellte erfindungsgemäße Cabriolet-Fahrzeug 1 kann, wie in Fig. 1 angedeutet, sowohl ein mit zumindest einer Rückbank 11 versehenes vier- oder mehrsitziges Fahrzeug als auch ein Zweisitzer sein.

Dabei kann das bewegliche und in geschlossener Stellung mittelbar oder unmittelbar an einen Windschutzscheibenrahmen 3 anschließende Dach 2 teilweise oder - wie hier - insgesamt ein mit einem Bezug 4 überzogenes Soft-Top bilden. Das Dach 2 kann manuell oder voll- oder teilautomatisch zu bewegen und zu seiner Öffnung in oder auf dem hinteren Fahrzeugbereich ablegbar sein.

Hier ist das Dach 2 in einer sog. Z-Faltung zu öffnen, wobei das im geschlossenen Zustand mit einem Windschutzscheibenrahmen 3 verbundene vordere Dachende 5 seine Orientierung im abgelegten Zustand beibehält, also mit der Außenseite 6 auch in abgelegter Stellung nach oben weist.

Bei geöffnetem Dach 2 kann somit diese vordere Dachende 5 selbst mit seiner nach oben weisenden Seite 6 einen oberen optischen Abschluss nach Art eines Deckels für das abgelegte Paket des Daches 2 ausbilden. Ein weiterer übergreifender Deckel oder ähnliches ist dann hier entbehrlich.

An seinen quer außen liegenden Rändern 7 ist der Bezug 4 mittelbar an längs verlaufenden und beweglichen seitlichen Rahmenteilen gehalten. Hier sind nur beispielhaft für einen langen Innenraum und ein daran angepasstes Dach 2 hintereinander drei Rahmenteile 8, 9, 10 vorgesehen, wobei der hintere Rahmenteil 10 hier einstückig mit der sich abwärts zur Fensterbrüstungslinie 11 erstreckenden Hauptsäule 12 ausgebildet ist. Die Rahmenteile 8, 9, 10 sind mit Dichtungen 15 gegenüber seitlichen Scheiben 13, 14 versehen. Zwischen den seitlichen Dichtungen 15 der Rahmenteile 8, 9, 10 und den Außenrändern 7 des Bezugs 4 sind über die gesamte Länge oder, wie hier, zumindest über einen Teilbereich Abstandsleisten 16 angeordnet, die eine die Breite von geschlossenen Seitenscheiben 13, 14, die sog. Scheibentonne, nach außen in Fahrzeugquerrichtung überragende Erstreckungskomponente haben. Das heißt, das Dach 2 kann je nach Breite der Leisten 16 an seinen Rändern 7 gegenüber geschlossenen Seitenscheiben 13, 14 in Fahrzeugquerrichtung vorstehen und damit breiter sein, als eigentlich für die reine Abdeckfunktion des geschlossenen Daches 2 erforderlich wäre. Dadurch kann sich bei der Dachablage eine erhöhte Breite zum Beispiel des vorderen Dachendes 5 ergeben, wodurch die dort verbleibenden seitlichen Spalte vermindert sind, so dass die Optik im abgelegten Zustand verbessert ist.

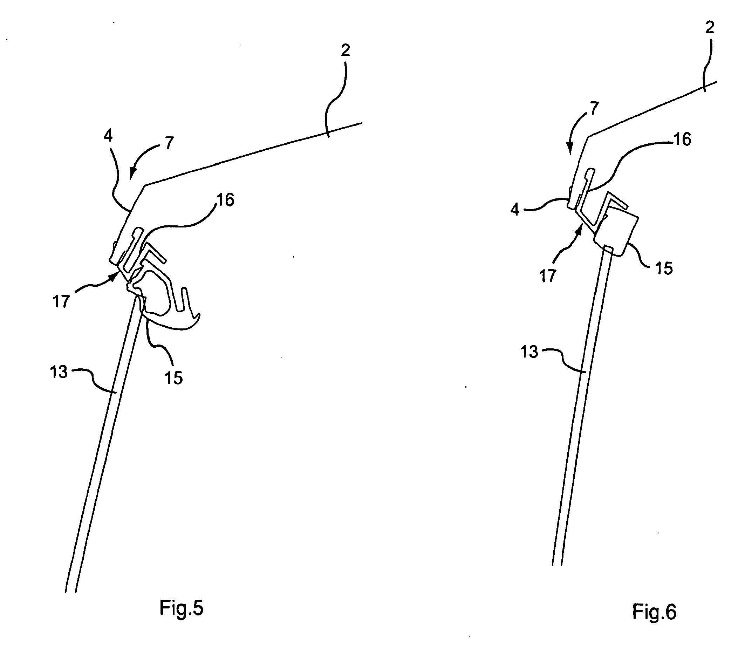

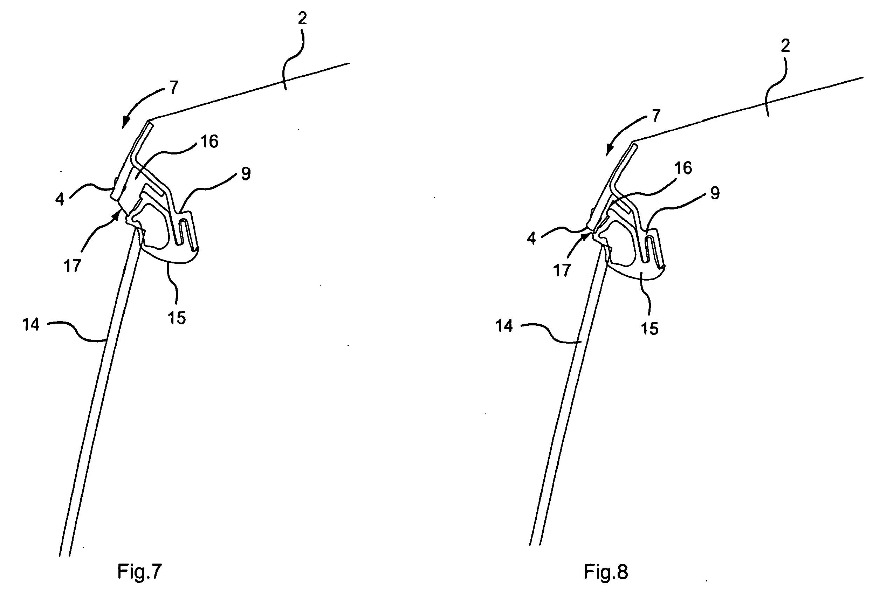

Die Leisten 16 sind in mehrere Teilabschnitte entsprechend den einzelnen seitlichen Rahmenteilen 8, 9, 10 geteilt und daher mit diesen bewegbar. Sowohl innerhalb eines Abschnitts als auch insgesamt müssen die Abstandsleisten 16 keine gleichmäßige Breite aufweisen, sondern können je nach Anforderung variieren. Zum Beispiel können die die Leisten 16 entgegen der Fahrtrichtung F nach hinten hin verjüngen, wodurch sich eine besondere Breite zum Beispiel nur des vorderen Dachendes 5 ergeben kann und das Dach 2 nach hinten hin schmaler wird und sich an die Scheibentonne annähert. Eine derartige Verjüngung der Leisten 16 nach hinten hin ist hier in der Zeichnung dargestellt und insbesondere anhand der Schnittdarstellungen nach den Figuren 5 bis 8 erkennbar. Die Dicke der Leisten 16 kann bis zu einigen Zentimetern betragen und bis auf wenige Millimeter verjüngen. Die Leisten 16 gehen hier nicht ganz bis zum hinteren Rahmenteil 10 durch, sondern enden kurz vor dem hinteren Ende des mittleren Rahmenteils 9.

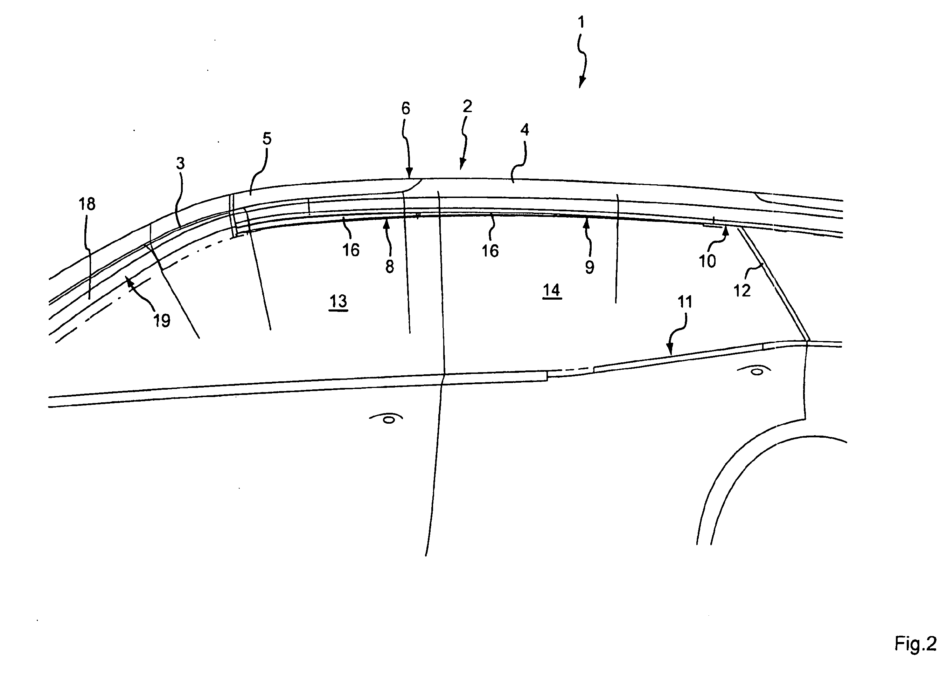

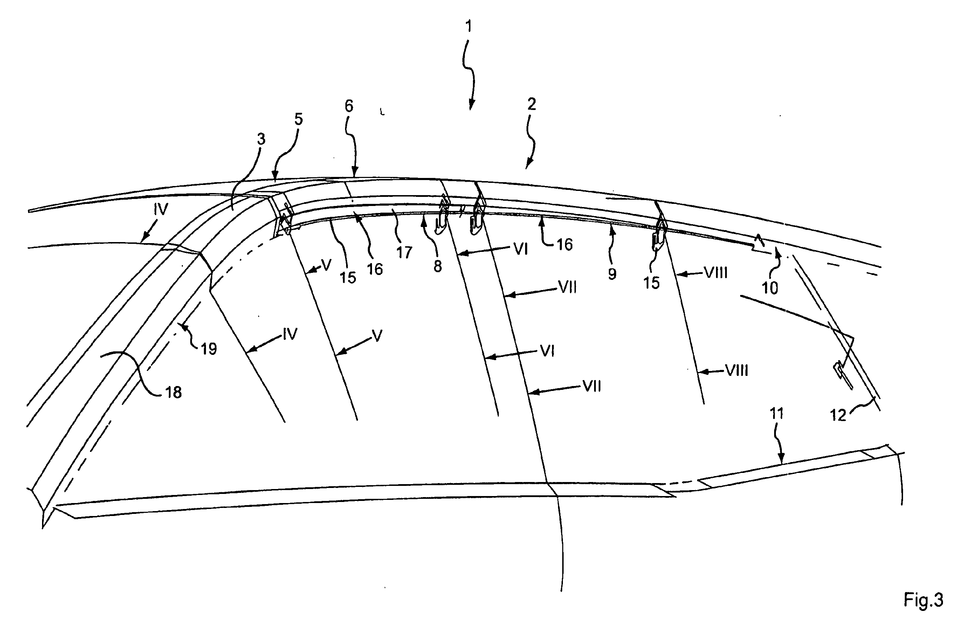

Dabei weisen die Leisten zwischen Rahmenteil 8, 9, 10 und Bezugrand 7 eine Außenfläche 17 auf, die bei geschlossenem Dach 2 (Fig. 1 bis Fig. 3) schräg nach unten und zur Seite weist, also das Lot auf dieser Fläche 17 sowohl eine Komponente nach quer außen als auch eine nach unten aufweist.

Die Außenfläche 17 kann in weiterer Funktion zum Beispiel als Träger von Beleuchtungsteilen, zum Beispiel LEDs, oder zur Aufnahme von Sensoren, die eine Bewegung im Schwenkbereich des sich schließenden Daches 2 erfassen und dann die Bewegung stoppen, vorgesehen sein. Auch eine reine Dekorationsfläche, zum Beispiel mit einer Lackierung in Wagenfarbe oder eine Chromleiste, kann vorgesehen sein.

In Anpassung an den seitlichen Überstand des Daches 2 ist auch an den seitlichen Säulen 18, den sog. A-Säulen, des Windschutzscheibenrahmens 3 auf seiner entgegen der Fahrtrichtung F weisenden Seite eine nach quer außen vorspringende und die Breite der geschlossenen Seitenscheiben nach außen überragende Sichtkante 19 vorgesehen, deren Lot eine nach hinten und eine nach unten weisende Komponente umfasst. Eine solche Lösung ist grundsätzlich auch bei einem Fahrzeug mit festem Dach vorstellbar. Auch hier kann dass die Sichtkante 19 einige Zentimeter breit sein und somit ebenfalls mit Kamera- oder Sensoreinheiten versehen sein.

## Patentansprüche

1. Cabriolet-Fahrzeug (1) mit einem zumindest teilweise mit einem Bezug (4) versehenen Dach (2), wobei der Bezug (4) an seinen quer außen liegenden Rändern (7) an beweglichen seitlichen Rahmenteilen (8;9;10) gehalten ist, die mit Dichtungen (15) gegenüber seitlichen Scheiben (13;14) versehen sind, wobei den seitlichen Rahmenteilen (8;9;10) und den Außenrändern (7) des Bezugs (4) zumindest über einen Teilbereich Abstandsleisten (16) zwischen Dichtung (15) und Außenrändern (7) zugeordnet sind, die eine die Breite von geschlossenen Seitenscheiben (13;14) nach außen in Fahrzeugquerrichtung überragende Erstreckungskomponente haben,
**dadurch gekennzeichnet,**
**dass** sich die Leisten (16) entgegen der Fahrtrichtung (F) nach hinten hin verjüngen.

2. Cabriolet-Fahrzeug (1) nach Anspruch 1
**dadurch gekennzeichnet,**
**dass** Leisten (16) in mehrere Teilabschnitte entsprechend den einzelnen seitlichen Rahmenteilen (8;9;10) geteilt sind.

3. Cabriolet-Fahrzeug (1) nach einem der Ansprüche 1 oder 2,
**dadurch gekennzeichnet,**
**dass** die Leisten (16) zwischen Rahmenteil (8;9;10) und Bezugrand (7) eine Außenfläche (17) aufweisen, die bei geschlossenem Dach (2) eine nach quer außen und eine nach unten weisende Erstreckungsrichtung hat.

4. Cabriolet-Fahrzeug (1) nach Anspruch 3,
**dadurch gekennzeichnet,**
**dass** die Außenfläche (17) als Dekorationsfläche ausgebildet ist.

5. Cabriolet-Fahrzeug (1) nach einem der Ansprüche 3 oder 4,
**dadurch gekennzeichnet,**
**dass** die Außenfläche (17) mit Beleuchtungs- oder Sensorelementen versehen ist.

6. Cabriolet-Fahrzeug (1) nach einem der Ansprüche 1 bis 5,
**dadurch gekennzeichnet,**
**dass** ein eine Windschutzscheibe seitlich einfassender Rahmenteil (18) auf seiner entgegen der Fahrtrichtung (F) weisenden Seite eine nach quer außen vorspringende und die Breite der geschlossenen Seitenscheiben (13;14) nach außen überragende Sichtkante (19) hat.

7. Cabriolet-Fahrzeug (1) nach Anspruch 6,
**dadurch gekennzeichnet,**
**dass** das Lot der Sichtkante (19) eine nach hinten und unten weisende Komponente umfasst.

8. Cabriolet-Fahrzeug (1) nach einem der Ansprüche 6 oder 7,
**dadurch gekennzeichnet,**
**dass** die Sichtkante (19) in ihrer Breitenerstreckung der Erstreckung der Abstandsleisten (16) des Daches (2) in Querrichtung angepasst ist.

9. Cabriolet-Fahrzeug (1) nach einem der Ansprüche 6 bis 8,
**dadurch gekennzeichnet,**
**dass** die Sichtkante (19) mit Kamera- oder Sensoreinheiten versehen ist.

## Claims

1. A convertible vehicle (1) with a roof (2) that is at least partly provided with a cover (4), said cover (4) being held at its transversely outer edges (7) by movable lateral frame parts (8; 9; 10) which are provided with seals (15) facing side windows (13; 14), said lateral frame parts (8; 9; 10) and said outer edges (7) of the cover (4) having spacer strips (16) assigned to them, at least over a partial region, between the seal (15) and the outer edges (7), said spacer strips (16) having an extension component protruding outwardly beyond the width of closed side windows (13; 14) in the transverse direction of the vehicle,
**characterised in that**,
the strips (16) taper towards the rear opposite the direction of travel (F).

2. The convertible vehicle (1) according to claim 1, **characterised in that** strips (16) are divided into a plurality of partial sections corresponding to the individual lateral frame parts (8; 9; 10).

3. The convertible vehicle (1) according to any one of claims 1 or 2, **characterised in that** the strips (16) have an outer surface (17) between the frame part (8; 9; 10) and the edge (7) of the cover, which outer surface (17) has a transversely outward and downward direction of extension.

4. The convertible vehicle (1) according to claim 3, **characterised in that** the outer surface (17) is provided as a decorative surface.

5. The convertible vehicle (1) according to any one of claims 3 or 4, **characterised in that** the outer surface (17) is provided with lighting elements or sensor elements.

6. The convertible vehicle (1) according to any one of claims 1 to 5, **characterised in that** a frame part (18) which laterally encloses a windscreen has a visible edge (19) on its side opposed to the direction of travel (F), said visible edge (19) protruding transversely outwardly and protruding outwardly beyond the width of the closed side windows (13; 14).

7. The convertible vehicle (1) according to claim 6, **characterised in that** the perpendicular of the visible edge (19) has a component pointing towards the rear and down.

8. The convertible vehicle (1) according to any one of claims 6 or 7, **characterised in that** the visible edge (19) is adapted in its width extension to the extension of the spacer strips (16) of the roof (2) in the transverse direction.

9. The convertible vehicle (1) according to any one of claims 6 to 8, **characterised in that** the visible edge (19) is provided with camera or sensor units.

## Revendications

1. Véhicule cabriolet (1) avec un toit (2) qui est doté au moins partiellement d'une enveloppe (4) retenue par ses bords transversalement extérieurs (7) sur des éléments de cadre latéraux déplaçables (8; 9; 10) qui sont dotés de joints d'étanchéité (15) en face de fenêtres latérales (13; 14), des baguettes d'espacement (16) étant associées, au moins dans une région partielle, auxdits éléments de cadre latéraux (8; 9; 10) et auxdits bords extérieurs (7) de l'enveloppe (4) entre le joint d'étanchéité (15) et les bords extérieurs (7), l'étendue desdites baguettes d'espacement (16) présentant une composante qui fait saillie dans la direction transversale du véhicule vers l'extérieur au-delà de la largeur des fenêtres latérales fermées (13; 14),
**caractérisé en ce que**
les baguettes (16) diminuent vers l'arrière, à l'opposée de la direction de marche (F).

2. Véhicule cabriolet (1) selon la revendication 1, **caractérisé en ce que** des baguettes (16) sont divisées en plusieurs sections partielles correspondant aux éléments de cadre latéraux individuels (8; 9; 10).

3. Véhicule cabriolet (1) selon l'une quelconque des revendications 1 ou 2, **caractérisé en ce que** les baguettes (16) présentent une face extérieure (17) entre l'élément de cadre (8; 9; 10) et le bord d'enveloppe (7), cette face extérieure (17) ayant une direction d'étendue orientée vers l'extérieur transversalement et vers le bas.

4. Véhicule cabriolet (1) selon la revendication 3, **caractérisé en ce que** la face extérieure (17) est réalisée en tant que face décorative.

5. Véhicule cabriolet (1) selon l'une quelconque des revendications 3 ou 4, **caractérisé en ce que** la face extérieure (17) est dotée d'éléments d'illumination ou d'éléments capteurs.

6. Véhicule cabriolet (1) selon l'une quelconque des revendications 1 à 5, **caractérisé en ce qu'**un élément de cadre (18) entourant un pare-brise latéralement présente, de son côté opposé à la direction de marche (F), une arête visible (19) faisant saillie vers l'extérieur transversalement et faisant saillie vers l'extérieur au-delà de la largeur des fenêtres latérales fermées (13; 14).

7. Véhicule cabriolet (1) selon la revendication 6, **caractérisé en ce que** la perpendiculaire de l'arête visible (19) présente une composante dirigée vers l'arrière et vers le bas.

8. Véhicule cabriolet (1) selon l'une quelconque des revendications 6 ou 7, **caractérisé en ce que** l'étendue en largeur de l'arête visible (19) est adaptée à l'étendue transversale des baguettes d'espacement (16) du toit (2).

9. Véhicule cabriolet (1) selon l'une quelconque des revendications 6 à 8, **caractérisé en ce que** l'arête visible (19) est dotée de moyens de caméra ou de capteurs.
